(19) Europäisches Patentamt / European Patent Office / Office européen des brevets

(11) **EP 4 742 340 A1**

(12) **EUROPEAN PATENT APPLICATION**

(43) Date of publication:
**13.05.2026 Bulletin 2026/20**

(21) Application number: **25198797.0**

(22) Date of filing: **28.08.2025**

(51) International Patent Classification (IPC):
**H01M 10/04** (2006.01)    **H01M 50/528** (2021.01)
**H01M 50/536** (2021.01)    **H01M 50/54** (2021.01)
**H01M 4/70** (2006.01)

(52) Cooperative Patent Classification (CPC):
**H01M 50/54; H01M 4/70; H01M 10/0413;
H01M 50/528; H01M 50/533; H01M 50/534;
H01M 50/536; H01M 50/55; H01M 50/553**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.11.2024 KR 20240159720**

(71) Applicant: **SAMSUNG SDI CO., LTD.
Yongin-si, Gyeonggi-do 17084 (KR)**

(72) Inventors:
• **JUNG, Yeon Ho
16678 Suwon-si (KR)**
• **LIM, Hyun Young
16678 Suwon-si (KR)**

(74) Representative: **Marks & Clerk LLP
15 Fetter Lane
London EC4A 1BW (GB)**

(54) **BATTERY AND BATTERY PACK INCLUDING THE SAME**

(57)    A battery includes a case (100), an electrode assembly (200) inside the case, the electrode assembly including electrodes parallel to each other in a first direction, a tab (301) member including electrode tabs extending from the electrodes in a one-to-one manner, the electrode tabs including first electrode tabs, a cap assembly facing the electrode assembly, the cap assembly including a terminal (420), and a current collector assembly (500) between the electrode assembly and the cap assembly, the current collector assembly including a current collector (510) connected to the terminal and a current collector plate (520) connected to the tab member, and the current collector plate including a slit (S11,S12) through which the first electrode tabs pass.

FIG. 3

**Description**

BACKGROUND

1. Field

The present disclosure relates to a battery and a battery pack including the same.

2. Description of the Related Art

Unlike a primary battery that cannot be recharged, a secondary battery is a battery that can be recharged and discharged. A low-capacity secondary battery may be used for portable small-sized electronic devices, such as smartphones, feature phones, notebook computers, digital cameras, and camcorders, and a high-capacity secondary battery is widely used as a power source for driving a motor and a power storage battery in hybrid vehicles or electric vehicles. Such a secondary battery may include electrodes having a positive electrode and/or a negative electrode, an electrode assembly having the electrodes, a case that accommodates the electrode assembly, electrode terminals connected to the electrode assembly, and the like.

As technology advances, secondary batteries with high capacity are required. Accordingly, a plurality of secondary batteries may be electrically connected and used. For example, the secondary battery may be applied to an electronic device in the form of a battery module including a plurality of secondary batteries, and/or a battery pack including a plurality of secondary battery modules. According to an embodiment, the secondary battery pack is also configured by a plurality of secondary batteries. In this case, the electronic device is an electronic device that requires high power and/or high capacity and includes, for example, an electric vehicle or the like.

A secondary battery may include an electrode assembly in which a positive electrode, a separator, and a negative electrode are alternately arranged. The electrode assembly may be accommodated inside a case. A plurality of positive and negative electrodes (hereinafter referred to as "electrodes") constituting the electrode assembly may be electrically connected to the outside through positive and negative electrode tabs (hereinafter referred to as "electrode tabs"), respectively. That is, a plurality of positive electrode tabs and a plurality of negative electrode tabs may be electrically connected to a positive electrode terminal and a negative electrode terminal (hereinafter referred to as "electrode terminals"), which are installed on a cap plate, respectively.

To establish an electrical connection between the plurality of electrode tabs and the electrode terminal, a connection assembly including one or more connection members may be disposed between the plurality of electrode tabs and the electrode terminal. The connection assembly may electrically connect the plurality of electrode tabs to the electrode terminal by joining one portion thereof to the plurality of electrode tabs and another portion thereof to the electrode terminal. In the connection assembly, the connection member joined to the plurality of electrode tabs and the connection member joined to the electrode terminal may be different parts of a single structure or separate structures that are coupled together.

Such a connection assembly can be referred to as a current collector assembly that performs the function of gathering current supplied from the plurality of electrode tabs and transmitting the current to the electrode terminal. The shape and configuration of the current collector assembly can be implemented in various ways depending on the type, internal structure, specifications, and the like of a secondary battery.

The above-described information disclosed in the background technology of the present disclosure is merely intended to improve understanding of the background of the present disclosure and thus may include information that does not form the related art.

SUMMARY

According to an aspect of the present disclosure, there is provided a battery including a case, an electrode assembly disposed inside the case and including a plurality of electrodes disposed parallel to each other in a first direction, a tab member including a plurality of electrode tabs extending from the plurality of electrodes in a one-to-one manner, a cap assembly disposed to face the electrode assembly and including a terminal, and a current collector assembly disposed between the electrode assembly and the cap assembly, and including a current collector connected to the terminal and a current collector plate connected to the tab member, wherein the current collector plate includes a slit through which first electrode tabs, which are portions of the plurality of electrode tabs, pass.

According to an aspect of the embodiment, the first electrode tabs may pass through the slit and may be joined to one surface of the current collector plate.

In addition, second electrode tabs, which are the remaining electrode tabs that do not pass through the slit among the plurality of electrode tabs, may be joined to the other surface of the current collector plate.

In addition, the slit may be formed in a second direction intersecting the first direction.

In addition, the first electrode tabs may pass through the slit, and may be joined to the one surface of the current collector plate by being divided into both sides in the first direction.

In addition, the slit may be located at a center of the current collector plate in the first direction.

In addition, a width (W) of the slit may satisfy Equation 1 below,

$$[\text{Equation 1}]$$

$$t \times n \leq W \leq t \times n + 2.0 \text{ mm},$$

wherein t may represent a thickness of the electrode tab and n may represent the number of first electrode tabs.

According to another aspect of the present disclosure, there is provided a battery including a case, an electrode assembly disposed inside the case and including a plurality of positive electrodes and a plurality of negative electrodes alternately disposed in a first direction, a positive electrode tab member including a plurality of positive electrode tabs extending from the plurality of positive electrodes in a one-to-one manner, a negative electrode tab member spaced apart from the positive electrode tab member in a second direction intersecting the first direction and including a plurality of negative electrode tabs extending from the plurality of negative electrodes in a one-to-one manner, a cap assembly disposed to face the electrode assembly and including a positive electrode terminal and a negative electrode terminal, a positive electrode current collector assembly disposed between the electrode assembly and the cap assembly, and including a positive electrode current collector connected to the positive electrode terminal and a positive electrode current collector plate connected to the positive electrode tab member, and a negative electrode current collector assembly disposed between the electrode assembly and the cap assembly, and including a negative electrode current collector connected to the negative electrode terminal and a negative electrode current collector plate connected to the negative electrode tab member, wherein the positive electrode current collector plate includes a first slit through which first positive electrode tabs, which are portions of the plurality of positive electrode tabs, pass, and the negative electrode current collector plate includes a second slit through which first negative electrode tabs, which are portions of the plurality of negative electrode tabs, pass.

According to an aspect of the embodiment, the first positive electrode tabs may pass through the first slit and may be joined to one surface of the positive electrode current collector plate, and the first negative electrode tabs may pass through the second slit and may be joined to one surface of the negative electrode current collector plate.

In addition, second positive electrode tabs, which are the remaining positive electrode tabs that do not pass through the first slit among the plurality of positive electrode tabs, may be joined to the other surface of the positive electrode current collector plate, and second negative electrode tabs, which are the remaining negative electrode tabs that do not pass through the second slit among the plurality of negative electrode tabs, may be joined to the other surface of the negative electrode current collector plate.

In addition, the first slit and the second slit may each be formed in the second direction.

In addition, the first positive electrode tabs may pass through the first slit, and may be joined to the one surface of the positive electrode current collector plate by being divided into both sides in the first direction, and the first negative electrode tabs may pass through the second slit, and may be joined to the one surface of the negative electrode current collector plate by being divided into both sides in the first direction.

In addition, the first slit may be located at a center of the positive electrode current collector plate in the first direction, and the second slit may be located at a center of the negative electrode current collector plate in the first direction.

A width (W1) of the first slit may satisfy Equation 2 below, and a width (W2) of the second slit may satisfy Equation 3 below,

$$[\text{Equation 2}]$$

$$t1 \times n1 \leq W1 \leq t1 \times n1 + 1.2 \text{ to } 2.0 \text{ mm},$$

and

$$[\text{Equation 3}]$$

$$t2 \times n2 \leq W2 \leq t2 \times n2 + 1.2 \text{ to } 2.0 \text{ mm},$$

wherein t1 may represent a thickness of the positive electrode tab, n1 may represent the number of first positive electrode tabs, t2 may represent a thickness of the negative electrode tab, and n2 may represent the number of first negative electrode tabs.

In addition, the width (W1) of the first slit may be equal to the width (W2) of the second slit.

In addition, the width (W1) of the first slit may be greater than the width (W2) of the second slit.

According to still another aspect of the present disclosure, there is provided a battery pack including a housing, and a plurality of batteries disposed inside the housing, wherein each of the batteries includes a case, an electrode assembly disposed inside the case and including a plurality of electrodes disposed parallel to each other in a first direction, a tab member including a plurality of electrode tabs extending from the plurality of electrodes in a one-to-one manner, a cap assembly disposed to face the electrode assembly and including a terminal, and a current collector assembly disposed between the electrode assembly and the cap assembly, and including a current collector connected to the terminal and a current collector plate connected to the tab member, wherein the current collector plate includes a slit through which first electrode tabs, which are portions of the plurality of electrode tabs, pass.

According to an aspect of the embodiment, the first electrode tabs may pass through the slit and may be joined to one surface of the current collector plate.

In addition, second electrode tabs, which are the remaining electrode tabs that do not pass through the slit among the plurality of electrode tabs, may be joined to the other surface of the current collector plate.

In addition, the slit may be formed in a second direction intersecting the first direction, and the first electrode tabs may pass through the slit, and may be joined to the one surface of the current collector plate by being divided into both sides in the first direction.

At least some of the above and other features of the invention are set out in the claims.

## BRIEF DESCRIPTION OF THE DRAWINGS

Features will become apparent to those of skill in the art by describing in detail embodiments with reference to the attached drawings, in which:

FIG. 1 is a perspective exploded view of a battery pack according to an embodiment of the present disclosure;
FIG. 2 is a perspective view of a secondary battery according to an embodiment of the present disclosure;
FIG. 3 is an exploded perspective view of a secondary battery according to an embodiment of the present disclosure;
FIG. 4 is a cross-sectional view of a secondary battery according to an embodiment of the present disclosure;
FIG. 5 is an exploded schematic view of an electrode assembly according to an embodiment of the present disclosure;
FIG. 6A is a perspective view of a current collector plate according to an embodiment of the present disclosure;
FIG. 6B is a plan view of a state in which electrode tabs are connected to the current collector plate of FIG. 6A; and
FIG. 6C is a cross-sectional view taken along line AA' of FIG. 6B.

## DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawings, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in the present specification and claims should not be construed as being limited to ordinary or dictionary meanings and should be construed as meanings and concepts consistent with the technical disclosure based on the principle that an inventor can appropriately define concepts and terms to explain the disclosure of the inventor in the best way. Therefore, the embodiments described herein and the configuration illustrated in the drawings are only the most preferred some embodiments and are not representative of the full the technical disclosure, and thus, it should be understood that various equivalents and modifications may be made at the time of filing the present application.

Further, when used in the present specification, "comprise/include" and/or "comprising/including" may specify the presence of described shapes, numbers, steps, operations, members, elements, and/or groups thereof and may not exclude the presence or addition of one or more other shapes, numbers, steps, operations, members, elements, and/or groups thereof.

The description that two objects for comparison are "the same" as each other may denote that they are "substantially the same" as each other. Thus, the range of the expression "substantially the same" may include a case of having a deviation considered as a low degree, for example, a deviation within 5%. In addition, the description that a certain parameter is the same in a certain region may denote that the parameter is the same from an average perspective.

Terms including ordinals such as first and second may be used to describe various components, but, of course, the components are not limited by the terms. These terms are merely used to distinguish one component from another. Unless particularly described as the opposite, a first component may also be a second component.

Throughout the specification, unless particularly described otherwise, each component may be provided in a singular number or a multiple number.

Arrangement of any configuration on an "upper portion (or lower portion)" of a component or "on (or below)" the component may mean not only any configuration may be disposed to be in contact with an upper surface (or lower surface) of the component but also that another configuration may be interposed between the component and any configuration disposed on (or below) the component.

In addition, when it is described that a component is "connected," "coupled," or "accessed" to another component, these components may be directly connected or accessed to each other, but it should be understood that still another component may be "interposed" between these components, or these components are "connected", "coupled" or "accessed" through still another component.

As used herein, the term "and/or" includes any and all combinations of one or more of the associated listed items. Further, when describing embodiments of the present disclosure, the use of "may" means one or more embodiments of the present disclosure. When preceding a list of elements, the terms "one or more" and "at least one" modify the entire list of elements and do not modify the individual elements of the list.

The expression "A and/or B" throughout the specification means A, B, or A and B, unless otherwise differently stated. The expression "C to D" means C or more and D or less, unless otherwise specified.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, and the like may be used herein to describe various elements, components, regions, layers, and/or sections, these elements, components, regions, layers, and/or sections should not be limited by these terms. These terms are used to distinguish one element, component, region, drawing layer, or cross section from another element, component, region, drawing layer, or cross section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the figures. For example, when the device in the drawing is turned over, elements described as "below" or "beneath" other elements would then be oriented "above" or "over" the other elements. Thus, the term "below" may encompass both an orientation of above and below.

The terms used in the present specification are intended to describe embodiments of the present disclosure and are not intended to limit the present disclosure.

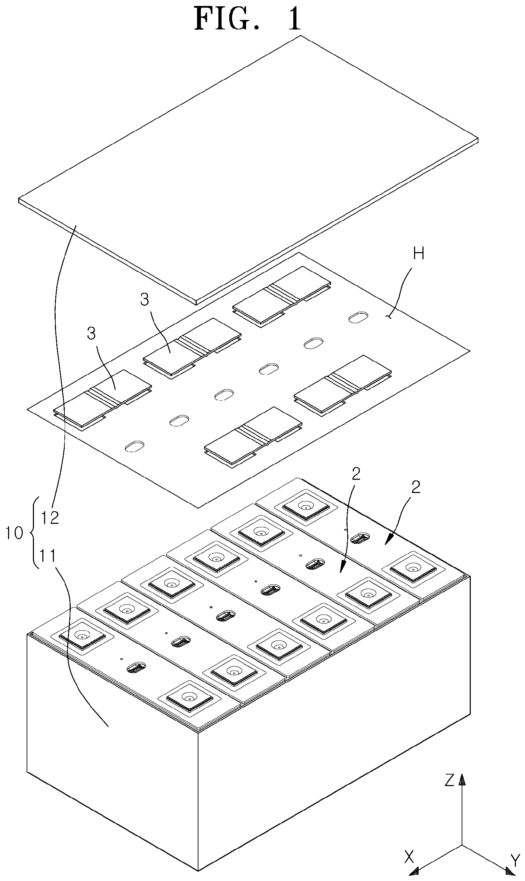

FIG. 1 is a perspective view schematically illustrating a configuration of a battery pack according to an embodiment of the present disclosure. Referring to FIG. 1, the battery pack may include a housing 10, a secondary battery 2, and a bus bar 3.

The housing 10 may form a schematic exterior of the battery pack, and may provide a space in which a plurality of secondary batteries 2 may be accommodated. The housing 10 may include a housing body 11 and a cover 12.

The housing body 11 may be formed to have a box shape, with an empty interior and one open surface. A cross-sectional shape of the housing body 11 may be, e.g., quadrangular, or may be changed in design to have various shapes, e.g., a polygonal shape, a circular shape, an elliptical shape, etc..

The cover 12 may be coupled to the housing body 11 and may close an internal space of the housing body 11. As an example, the cover 12 may be formed to have a plate shape and may be disposed to face the open surface of the housing body 11. The cover 12 may be fixed to the housing body 11 by various types of coupling methods, e.g., bolting, welding, fitting, and the like.

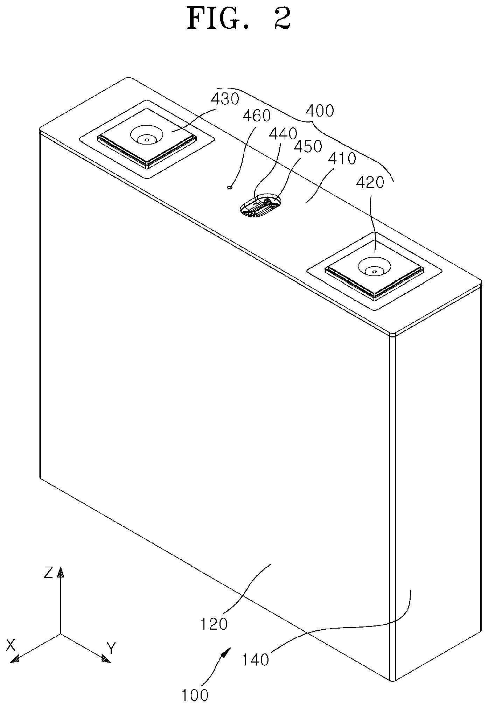

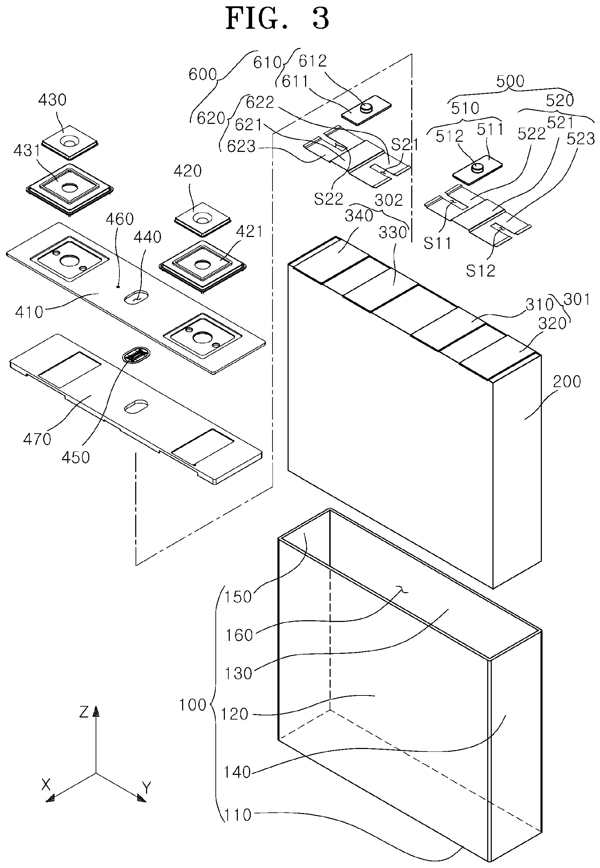

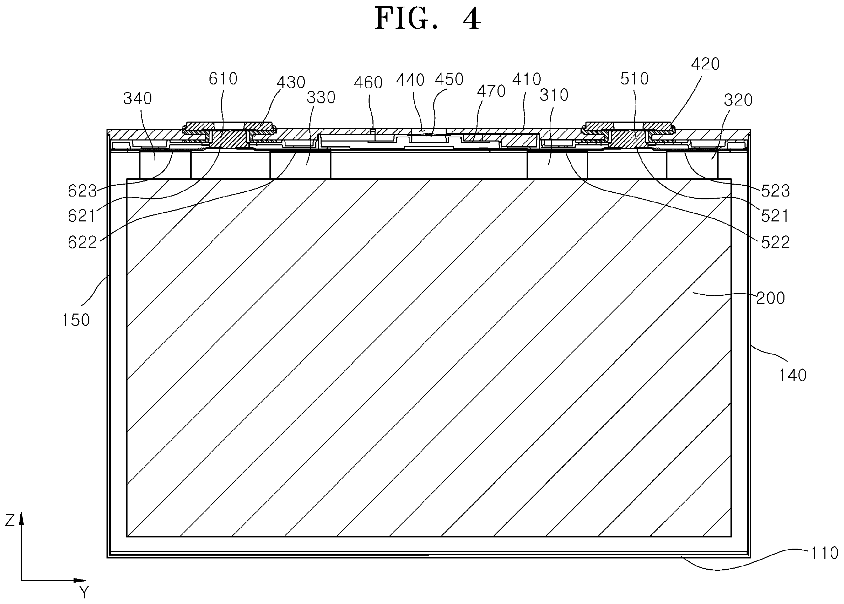

The secondary battery 2 may function as a unit structure, which stores and supplies power, in the battery pack. FIG. 2 is a perspective view schematically illustrating a configuration of the secondary battery 2 according to an embodiment of the present disclosure, FIG. 3 is an exploded perspective view schematically illustrating a configuration of the secondary battery 2 according to an embodiment of the present disclosure, and FIG. 4 is a cross-sectional view schematically illustrating a configuration of the secondary battery 2 according to an embodiment of the present disclosure.

Hereinafter, a case in which the secondary battery 2 is a lithium-ion secondary battery having a prismatic shape will be described as an example. However, the secondary battery may be a lithium polymer battery, a cylindrical battery, etc..

Referring to FIGS. 2 to 4, the secondary battery 2 may include a case 100, an electrode assembly 200, first and second electrode tabs 310 and 320, a cap assembly 400, and first and second current collector assemblies 500 and 600.

The case 100 may form a schematic exterior of the secondary battery 2 and may accommodate the electrode assembly 200. The case 100 may include a bottom portion 110, a front surface portion 120, a rear surface portion 130, a first side surface portion 140, and a second side surface portion 150.

The bottom portion 110 may form a lower exterior of the case 100 (based on FIG. 3). The bottom portion 110 may have a rectangular plate shape. The bottom portion 110 may be seated on a bottom surface of the housing body 11.

The front surface portion 120, the rear surface portion 130, the first side surface portion 140, and the second side surface portion 150 may form a perimeter exterior of the case 100. The front surface portion 120, the rear surface portion 130, the first side surface portion 140, and the second side surface portion 150 may have the form of plates extending upward (based on FIG. 3) from edges of the bottom portion 110. The front surface portion 120, the rear surface portion 130, the first side surface portion 140, and the second side surface portion 150 may be disposed to surround an upper space of the bottom portion 110. The front surface portion 120, the rear surface portion 130, the first side surface portion 140, and the second side surface portion 150 may be disposed to form a rectangular cross-sectional shape.

The front surface portion 120 and the rear surface portion 130 may be disposed to face each other in a length direction of the housing 10. The front surface portion 120 and the rear surface portion 130 may be disposed parallel to each other. The front surface portion 120 and the rear surface portion 130 may have the same area.

The first side surface portion 140 and the second side surface portion 150 may be disposed to face each other in a width direction of the housing 10. The first side surface portion 140 and the second side surface portion 150 may be disposed parallel to each other. The first side surface portion 140 and the second side surface portion 150 may have the same area. The first side surface portion 140 and the second side surface portion 150 may each have a smaller area than each of the front surface portion 120 and the rear surface portion 130.

The case 100 may further include an opening 160. The opening 160 may refer to a space enclosed by upper end portions of the front surface portion 120, the rear surface portion 130, the first side surface portion 140, and the second side surface portion 150. The opening 160 interconnects the internal and external spaces of the case 100. Accordingly, the case 100 may have a rectangular parallelepiped shape with an open upper side.

As described herein, a first direction may refer to a direction parallel to an X-axis based on FIGS. 3 and 4 (e.g., a direction from the front surface portion 120 toward the rear surface portion 130). A second direction may refer to a direction parallel to a Y-axis based on FIGS. 3 and 4 e.g., a direction from the first side surface portion 140 toward the second side surface portion 150). A third direction may refer to a direction parallel to a Z-axis based on FIGS. 3 and 4 (e.g., a direction from the bottom portion 110 toward the opening 160).

The electrode assembly 200 may function as a unit structure for performing a power charging and discharging operation in the secondary battery. The electrode assembly 200 may be accommodated inside the case 100.

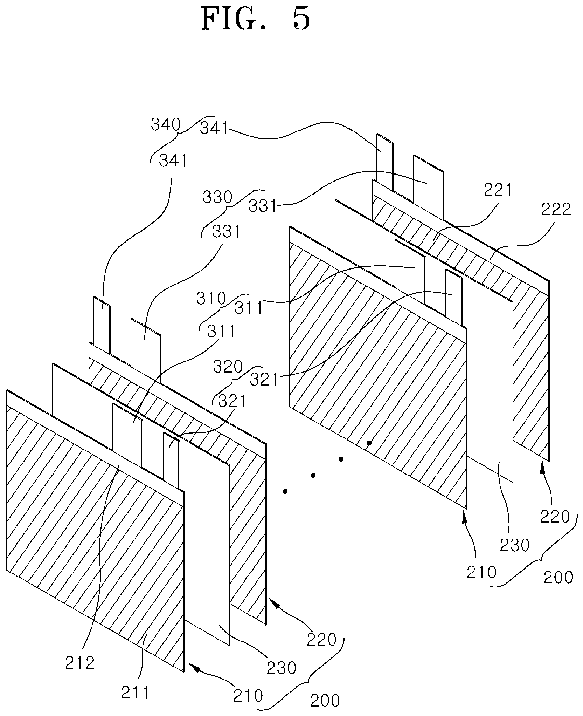

FIG. 5 is a view schematically illustrating a configuration of the electrode assembly 200 according to an embodiment of the present disclosure. Referring to FIG. 5, the electrode assembly 200 may include a first electrode 210, a second electrode 220, and a separator 230 disposed between the first electrode 210 and the second electrode 220. The first electrode 210, the separator 230, and the second electrode 220 may each be provided in plurality.

Hereinafter, a case in which the electrode assembly 200 has a stack form in which a plurality of first electrodes 210, a plurality of separators 230, and a plurality of second electrodes 220 are stacked sequentially in the first direction will be described as an example. However, the electrode assembly 200 may also be formed in such a way that the first electrode 210, the separator 230, and the second electrode 220 are stacked and then wound around a winding axis in a clockwise or counterclockwise direction.

The first electrode 210 may function as one of a positive electrode and a negative electrode of the electrode assembly 200. Hereinafter, a case in which the first electrode 210 is the positive electrode of the electrode assembly 200 will be described as an example. However, the first electrode 210 may also function as the negative electrode of the electrode assembly 200.

The first electrode 210 may be formed in the form of a foil including a metal material such as aluminum or an aluminum alloy. The type, size, and shape of the first electrode 210 may be adjusted as long as the first electrode 210 has conductivity and does not cause chemical changes in the secondary battery. A cross-sectional shape of the first electrode 210 may be changed in design to have various shapes other than a rectangular shape shown in FIG. 5.

A plurality of first electrodes 210 may be provided. The plurality of first electrodes 210 may be arranged (e.g., spaced apart from each other) in the first direction between the front surface portion 120 and the rear surface portion 130 of the case 100. The number of first electrodes 210 may be varied in design according to a charging capacity or the like of the secondary battery 2.

A first active material layer 211 may be formed on at least a portion of the first electrode 210. The first active material layer 211 may be formed on both surfaces of the first electrode 210, or alternatively, may be formed on only one surface of the first electrode 210. As the first electrode 210 functions as a positive electrode, the first active material layer 211 may include a positive electrode active material.

The positive electrode active material may include a compound (lithiated intercalation compound) capable of reversibly intercalating and deintercalating lithium. More specifically, the positive electrode active material may include one or more types of composite oxides of lithium and a metal selected from cobalt, manganese, nickel, iron, and a combination thereof.

For example, the positive electrode active material may include at least one of lithium-iron-phosphate oxide (LiFePO$_4$, LFP), lithium-manganese-iron-phosphate oxide (LiMnFePO$_4$, LMFP), and lithium-nickel-cobalt-manganese oxide (LiNi$_x$Co$_y$Mn$_z$O$_2$, NCM). Here, conditions of $0<x<1$, $0<y<1$, $0<z<1$, and $x+y+z=1$ may be satisfied. The positive electrode active material may include only one of LiFePO$_4$, LiMnFePO$_4$, and LiNi$_x$Co$_y$Mn$_z$O$_2$, and may also include two or all of LiFePO$_4$, LiMnFePO$_4$, and LiNi$_x$Co$_y$Mn$_z$O$_2$.

The first active material layer 211 may further include a positive electrode conductive material. The positive electrode conductive material may be used to impart conductivity to the first active material layer 211, and any electrically conductive material that does not cause a chemical change in the battery may be used. Examples of the positive electrode conductive material may include a carbon material such as natural graphite, artificial graphite, carbon black, acetylene black, Ketjen black, carbon fibers, carbon nanofibers, carbon nanotubes, and the like, a metal material in the form of a metal powder or metal fibers including copper, nickel, aluminum, silver, and the like, a conductive polymer such as a polyphenylene derivative, or a mixture thereof.

The first active material layer 211 may further include a positive electrode binder. The positive electrode binder may serve to adhere particles constituting the positive electrode active material to each other well, and to adhere the positive electrode active material to the first electrode 210 well. Examples of the positive electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the positive electrode binder, a cellulose compound capable of imparting viscosity may be further included. As the cellulose compound, one or more of carboxymethyl cellulose, hydroxypropylmethyl cellulose, methyl cellulose, or alkali metal salts thereof may be used in combination. Na, K, or Li may be used as the alkali metal.

The dry binder may be a polymer material capable of being fiberized, and may be, e.g., polytetrafluoroethylene, polyvinylidene fluoride, a polyvinylidene fluoride-hexafluoropropylene copolymer, a polyethylene oxide, or a combination thereof.

The first electrode 210 may include a first uncoated portion 212 on which the first active material layer 211 is not formed. The first uncoated portion 212 may be disposed in an upper end region of the first electrode 210, which is disposed to face the opening 160 from inside the case 100. However, the first uncoated portion 212 may be formed across the entire edge region of the first electrode 210.

The second electrode 220 may function as the other one of the positive electrode and the negative electrode of the electrode assembly 200. Hereinafter, a case in which the second electrode 220 is the negative electrode of the electrode assembly 200 will be described as an example. However, the second electrode 220 may also function as the positive electrode of the electrode assembly 200.

A plurality of second electrodes 220 may be provided. The plurality of second electrodes 220 may be arranged (e.g., spaced apart from each other) in the first direction between the front surface portion 120 and the rear surface portion 130 of the case 100. The first electrode 210 and the second electrode 220 may be alternately disposed in the first direction. The second electrode 220 may be disposed to be spaced apart from the first electrode 210 by a predetermined distance in the first direction.

The second electrode 220 may be formed in the form of a foil including a metal material such as copper, a copper alloy, nickel, or a nickel alloy. The type, size, and shape of the second electrode 220 may be adjusted as long as the second electrode 220 has conductivity and does not cause chemical changes in the secondary battery. A cross-sectional shape of the second electrode 220 may be changed in design to have various shapes other than a rectangular shape shown in FIG. 5.

A second active material layer 221 may be formed on at least a portion of the second electrode 220. The second active material layer 221 may be formed on both surfaces of the second electrode 220, or alternatively, may be formed on only one surface of the second electrode 220.

As the second electrode 220 functions as the negative electrode, the second active material layer 221 may include a negative electrode active material. The negative electrode active material may be a material that reversibly intercalates/deintercalates lithium ions, a lithium metal, a lithium metal alloy, a material capable of doping and dedoping lithium, or a transition metal oxide.

The material capable of reversible intercalation and deintercalation of lithium ions may be a carbon negative electrode active material, e.g., crystalline carbon, amorphous carbon, or a combination thereof. Examples of the crystalline carbon may include graphite such as amorphous, plate-shaped, flaky, spherical, or fibrous natural graphite or artificial graphite. Examples of the amorphous carbon may include soft carbon or hard carbon, a mesophase pitch carbide product, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si negative electrode active material or a Sn negative electrode active material may be used as the material capable of doping and dedoping lithium. The Si negative electrode active material may include silicon, a silicon-carbon composite, $SiO_x$ ($0<x<2$), a Si-Q alloy (where, Q is selected from an alkali metal, an alkaline-earth metal, a Group 13 element, a Group 14 element (excluding Si), a Group 15 element, a Group 16 element, a transition metal, a rare-earth element, and a combination thereof), or a combination thereof. The Sn negative electrode active material may include Sn, $SnO_2$, a Sn-based alloy, or a combination thereof.

The silicon-carbon composite may be a composite of silicon and amorphous carbon. According to an embodiment, the silicon-carbon composite may be in the form of silicon particles and amorphous carbon coated on the surface of the silicon particles. For example, the silicon-carbon composite may include a secondary particle (core) in which silicon primary particles are agglomerated and an amorphous carbon coating layer (shell) located on the surface of the secondary particle. The amorphous carbon may also be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si negative electrode active material or the Sn negative electrode active material may be used by being mixed with a carbon-based negative electrode active material.

The second active material layer 221 may further include a negative electrode conductive material and a negative electrode binder. The negative electrode conductive material may be used to impart conductivity to the second active material layer 221, and any electrically conductive material that does not cause a chemical change in the battery may be used. Examples of the negative electrode conductive material may include a carbon material such as natural graphite, artificial graphite, carbon black, acetylene black, Ketjen black, carbon fibers, carbon nanofibers, carbon nanotubes, and the like, a metal material in the form of a metal powder or metal fibers including copper, nickel, aluminum, silver, and the like, a conductive polymer such as a polyphenylene derivative, or a mixture thereof.

The negative electrode binder may serve to adhere particles constituting the negative electrode active material to each other well, and to adhere the negative electrode active material to the second electrode 220 well. Examples of the negative electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. Na, K, or Li can be used as the alkali metal.

The dry binder may be a polymer material capable of being fiberized, and may be, e.g., polytetrafluoroethylene, polyvinylidene fluoride, a polyvinylidene fluoride-hexafluoropropylene copolymer, a polyethylene oxide, or a combination thereof.

The second electrode 220 may include a second uncoated portion 222 on which the second active material layer 221 is not formed. The second uncoated portion 222 may be disposed in an upper end region of the second electrode 220 disposed to face the opening 160 from inside the case 100. However, the second uncoated portion 222 may be formed across the entire edge region of the second electrode 220.

The separator 230 may be disposed between the first electrode 210 and the second electrode 220. The separator 230 may function to prevent short-circuiting of the first electrode 210 and the second electrode 220 while allowing the movement of lithium ions between the first electrode 210 and the second electrode 220.

The separator 230 may be disposed to cover the entire surface region of the electrode assembly 200. Accordingly, the separator 230 may prevent the first electrode 210 and the second electrode 220 from being directly exposed to the outside of the electrode assembly 200.

The separator 230 may be made of polyethylene, polypropylene, polyvinylidene fluoride, or a multilayer film of two or more layers thereof, and may also be made of a mixed multilayer film, such as a polyethylene/polypropylene double-layered separator, a polyethylene/polypropylene/polyethylene three-layered separator, and a polypropylene/polyethylene/polypropylene three-layered separator.

The separator 230 may include a porous substrate, and a coating layer including an organic material, an inorganic material, or a combination thereof located on one surface or both surfaces of the porous substrate.

The porous substrate may be a polymer film formed of a polymer, or a copolymer or a mixture of two or more selected from polyolefins such as polyethylene, polypropylene, and the like, polyesters such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, Teflon, and polytetrafluoroethylene.

The organic material may include a polyvinylidene fluoride-based polymer or a (meth)acrylic-based polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof.

The organic and inorganic materials may be present by being mixed in one coating layer or may be present in a form in which a coating layer including organic materials and a coating layer including inorganic materials are stacked.

The first tab member 301 (FIG. 3) may be connected to the first electrode 210, and may protrude outward from the electrode assembly 200. As the first electrode 210 functions as the positive electrode, the first tab member 301 may function as a positive electrode tab of the secondary battery 2. However, when the first electrode 210 is a negative electrode, the first tab member 301 may function as a negative electrode tab of the secondary battery 2.

The first tab member 301 may extend in the third direction from the electrode assembly 200. That is, the first tab member 301 may extend toward the opening 160 from inside the case 100.

The first tab member 301 may include one or a plurality of tab members. As an example, the first tab member 301 may include a first inner tab member 310 and a first outer tab member 320 (FIG. 3 and FIG. 5). However, the first tab member 301 may include one or three or more tab members.

The first inner tab member 310 and the first outer tab member 320 may be spaced apart from each other in the second direction. As an example, the first outer tab member 320 and the first inner tab member 310 may be disposed sequentially in the second direction. That is, the first outer tab member 320 may be disposed at a position spaced apart from the first inner tab member 310 by a predetermined distance in a direction opposite to the second direction. The first outer tab member 320 may be disposed at a position relatively closer to the first side surface portion 140 than the first inner tab member 310, e.g., a distance between the first outer tab member 320 and the first side surface portion 140 may be smaller than a distance between the first inner tab member 310 and the first side surface portion 140.

The first inner tab member 310 may include a first inner electrode tab (i.e., a first inner tab 311). The first inner tab 311 may have the form of a foil extending in the third direction from the first uncoated portion 212 of the first electrode 210. The first inner tab 311 may have a substantially rectangular shape. However, the shape of the first inner tab 311 may be variously changed in design.

The first inner tab 311 may be integrally formed with the first electrode 210. For example, the first inner tab 311 may be a remaining region of the first uncoated portion 212 after a partial region of the first uncoated portion 212 has been cut or removed through processes such as notching. Alternatively, the first inner tab 311 may be fabricated separately from the first electrode 210 and then connected to the first uncoated portion 212 by welding or the like. The material of the first inner tab 311 may be the same as the material of the first electrode 210.

A plurality of first inner tabs 311 may be provided. The number of first inner tabs 311 may be the same as the number of first electrodes 210. The first inner tabs 311 may individually extend from the first uncoated portions 212 of the different first electrodes 210, respectively. The adjacent first inner tabs 311 may be disposed to face each other in the first direction. The adjacent first inner tabs 311 may be disposed parallel to each other. The first inner tab member 310 may be an assembly of the plurality of first inner tabs 311 stacked in the first direction. The adjacent first inner tabs 311 may be in contact with each other (e.g. at their free ends) and may be spaced apart from each other by a thickness of the separator 230 (e.g. where they extend from the uncoated portions).

The first outer tab member 320 may include a first outer electrode tab (i.e., a first outer tab 321). The first outer tab 321 may have the form of a foil extending in the third direction from the first uncoated portion 212 of the first electrode 210.

The first outer tab 321 may be disposed at a position spaced apart from the first inner tab 311 by a predetermined distance in a direction opposite to the second direction. The first outer tab 321 may have a substantially rectangular shape. However, the shape of the first outer tab 321 may be variously changed in design.

The first outer tab 321 may be integrally formed with the first electrode 210. For example, the first outer tab 321 may be a region that excludes the first inner tab 311 from a remaining region of the first uncoated portion 212 after a partial region of the first uncoated portion 212 has been cut or removed through processes such as notching. Alternatively, the first outer tab 321 may be fabricated separately from the first electrode 210 and then connected to the first uncoated portion 212 by welding or the like. The material of the first outer tab 321 may be the same as the material of the first electrode 210.

A plurality of first outer tabs 321 may be provided. The number of first outer tabs 321 may be the same as the number of first electrodes 210. The first outer tabs 321 may individually extend from the first uncoated portions 212 of the different first electrodes 210, respectively. The adjacent first outer tabs 321 may be disposed to face each other in the first direction. The adjacent first outer tabs 321 may be disposed parallel to each other. Accordingly, the first outer tab member 320 may be an assembly of the plurality of first outer tabs 321 stacked in the first direction. The adjacent first outer tabs 321 may be in contact with each other (e.g. at their free ends) and may be spaced apart from each other by the thickness of the separator 230 (e.g. where they extend from the uncoated portions).

The secondary battery 2 may further include a second tab member 302. The second tab member 302 may be connected to the second electrode 220, and may protrude outward from the electrode assembly 200. As the second electrode 220 functions as the negative electrode, the second tab member 302 may function as a negative electrode tab of the secondary battery 2. However, the second tab member 302 may function as a positive electrode tab of the secondary battery 2 when the second electrode 220 is the positive electrode.

The second tab member 302 may extend in the third direction from the electrode assembly 200. That is, the second tab member 302 may extend toward the opening 160 from inside the case 100.

The second tab member 302 may include one or a plurality of tab members. As an example, the second tab member 302 may include a second inner tab member 330 and a second outer tab member 340. However, the second tab member 302 may include one or three or more tab members.

The second inner tab member 330 and the second outer tab member 340 may be spaced apart from each other in the second direction. As an example, the second inner tab member 330 and the second outer tab member 340 may be disposed sequentially in the second direction. That is, the second outer tab member 340 may be disposed at a position spaced apart from the second inner tab member 330 by a predetermined distance in the second direction. The second outer tab member 340 may be disposed at a position relatively closer to the second side surface portion 150 than the second inner tab member 330, e.g., a distance between the second outer tab member 340 and the second side surface portion 150 may be smaller than a distance between the second inner tab member 330 and the second side surface portion 150.

The second inner tab member 330 may include a second inner electrode tab (i.e., a second inner tab 331). The second inner tab 331 may have the form of a foil extending in the third direction from the second uncoated portion 222 of the second electrode 220. The second inner tab 331 may have a substantially rectangular shape. However, the shape of the second inner tab 331 may be variously changed in design.

The second inner tab 331 may be integrally formed with the second electrode 220. For example, the second inner tab 331 may be a remaining region of the second uncoated portion 222 after a partial region of the second uncoated portion 222 has been cut or removed through processes such as notching. Alternatively, the second inner tab 331 may be fabricated separately from the second electrode 220 and then connected to the second uncoated portion 222 by welding or the like. The material of the second inner tab 331 may be the same as the material of the second electrode 220.

A plurality of second inner tabs 331 may be provided. The number of second inner tabs 331 may be the same as the number of second electrodes 220. The second inner tabs 331 may individually extend from the second uncoated portions 222 of the different second electrodes 220, respectively. The adjacent second inner tabs 331 may be disposed to face each other in the first direction. The adjacent second inner tabs 331 may be disposed parallel to each other. Accordingly, the second inner tab member 330 may be an assembly of the plurality of second inner tabs 331 stacked in the first direction. The adjacent second inner tabs 331 may be in contact with each other (e.g. at their free ends) and may be spaced apart from each other by the thickness of the separator 230 (e.g. where they extend from the uncoated portions).

The second outer tab member 340 may include a second outer electrode tab (i.e., a second outer tab 341). The second outer tab 341 may have the form of a foil extending in the third direction from the second uncoated portion 222 of the second electrode 220. The second outer tab 341 may be disposed at a position spaced apart from the second inner tab 331 by a predetermined distance in the second direction. The second outer tab 341 may have a substantially rectangular shape. However, the shape of the second outer tab 341 is not limited thereto, and may be variously changed in design.

The second outer tab 341 may be integrally formed with the second electrode 220. For example, the second outer tab 341 may be a region that excludes the second inner tab 331 from a remaining region of the second outer tab 341 after a partial region of the second uncoated portion 222 has been cut or removed through processes such as notching. Alternatively, the second outer tab 341 may be fabricated separately from the second electrode 220 and then connected to the second uncoated portion 222 by welding or the like. The material of the second outer tab 341 may be the same as the material of the second electrode 220.

A plurality of second outer tabs 341 may be provided. The number of second outer tabs 341 may be the same as the number of second electrodes 220. The second outer tabs 341 may individually extend from the second uncoated portions 222 of the different second electrodes 220, respectively. The adjacent second outer tabs 341 may be disposed to face each other in the first direction. The adjacent second outer tabs 341 may be disposed parallel to each other. Accordingly, the second outer tab member 340 may be an assembly of the plurality of second outer tabs 341 stacked in the first direction. The adjacent second outer tabs 341 may be in contact with each other (e.g. at their free ends) and may be spaced apart from each other by the thickness of the separator 230 (e.g. where they extend from the uncoated portions).

The cap assembly 400 (FIG. 3 and FIG. 4) may be coupled to the case 100 and may seal the case 100. The cap assembly 400 may be disposed to face the electrode assembly 200 in the third direction. The cap assembly 400 may include a cap plate 410, a first terminal 420, and a second terminal 430.

The cap plate 410 forms a schematic exterior of the cap assembly 400, and may entirely support the first terminal 420 and the second terminal 430. The cap plate 410 may be formed to have the shape of a flat plate. The cap plate 410 may be disposed in the opening 160 of the case 100. The cap plate 410 may be disposed to face the electrode assembly 200 in the first direction. That is, the cap plate 410 may be disposed at a position spaced apart from the electrode assembly 200 by a predetermined distance in the third direction. The cap plate 410 may be disposed parallel to the bottom portion 110 of the case 100.

The cap plate 410 may be seated on an upper end portion of the case 100, more specifically, on the upper end portions of the front surface portion 120, the rear surface portion 130, the first side surface portion 140, and the second side surface portion 150. The cap plate 410 may be coupled to the case 100 by various types of coupling methods such as welding, bolting, fitting coupling, and the like.

The first terminal 420 may be inserted into the cap plate 410. The first terminal 420 may be electrically connected to the first electrode 210. As the first electrode 210 functions as the positive electrode, the first terminal 420 may be a positive electrode terminal of the secondary battery 2. In addition, an upper end portion of the first terminal 420 may protrude outward from the cap plate 410 in the third direction.

In FIG. 3, the first terminal 420 is illustrated as having a rectangular planar shape as an example, but the first terminal 420 may be designed to have various shapes such as a circular, elliptical, or polygonal shape. The first terminal 420 may be formed of an electrically conductive material such as aluminum, nickel, copper, or the like.

A first gasket 421 may be installed between the cap plate 410 and the first terminal 420. The first gasket 421 may electrically isolate the cap plate 410 from the first terminal 420, and may prevent moisture or foreign substances from entering between the cap plate 410 and the first terminal 420.

The first gasket 421 may be formed of an insulating material such as polyethylene (PE), polypropylene (PP), polyethylene terephthalate (PET), rubber, or the like. The first gasket 421 may be fixed between the cap plate 410 and the first terminal 420 by press-fitting, injection molding, adhesion, or the like.

The second terminal 430 may be inserted into the cap plate 410. The second terminal 430 may be electrically connected to the second electrode 220. As the second electrode 220 functions as the positive electrode, the second terminal 430 may be a negative electrode terminal of the secondary battery 2. In addition, an upper end portion of the second terminal 430 may protrude outward from the cap plate 410 in the third direction.

In FIG. 3, the second terminal 430 is illustrated as having a rectangular planar shape as an example, but the second terminal 430 may be designed to have various shapes such as a circular, elliptical, or polygonal shape. The second terminal 430 may be formed of an electrically conductive material such as aluminum, nickel, copper, or the like.

A second gasket 431 may be installed between the cap plate 410 and the second terminal 430. The second gasket 431 may electrically isolate the cap plate 410 from the second terminal 430 and prevent moisture or foreign substances from entering between the cap plate 410 and the second terminal 430.

The second gasket 431 may be formed of an insulating material such as polyethylene (PE), polypropylene (PP), polyethylene terephthalate (PET), rubber, or the like. The second gasket 431 may be fixed between the cap plate 410 and the second terminal 430 by press-fitting, injection molding, adhesion, or the like.

The cap assembly 400 may further include a vent hole 440 and a vent 450. The vent hole 440 may be formed to have the shape of a hole vertically passing through both surfaces of the cap plate 410 in the third direction. The vent hole 440 may function as a component that provides a path for flames, gases, smoke, or the like formed inside the case 100 to be discharged to the outside of the case 100 in the event of a thermal runaway of the secondary battery 2 due to overcurrent or the like. The vent hole 440 may be disposed between the first terminal 420 and the second terminal 430. A cross-sectional shape of the vent hole 440 may be changed in design to have various shapes such as an elliptical shape, a circular shape, and a polygonal shape.

The vent 450 may be installed in the vent hole 440, and may open and close in response to changes in internal pressure of the case 100. That is, the vent 450 may close the vent hole 440 during a normal operation of the secondary battery 2 to prevent the electrolyte or the like inside the case 100 from leaking out of the case 100, or to block moisture, foreign substances, or the like from entering the case 100. The vent 450 may open the vent hole 440 during thermal runaway of the secondary battery 2 to guide flames, gases, smoke, or the like formed inside the case 100 to be discharged to the outside of the case 100.

The vent 450 may be formed to have a substantially plate shape. The vent 450 may be fixed to the cap plate 410 by various types of coupling methods such as welding, bolting, fitting, and the like. The vent 450 may be disposed inside the vent hole 440, or may be disposed on an upper or lower side of the cap plate 410 to face the vent hole 440 in the third direction.

A thickness of the vent 450 in the third direction may be less than a thickness of the cap plate 410. Accordingly, the vent 450 may easily rupture or fracture when the internal pressure of the case 100 rises. The vent 450 may include a notch formed to be recessed inward of the vent 450 to preferentially fracture when the internal pressure of the case 100 rises.

The cap assembly 400 may further include an electrolyte injection port 460 which is formed through the cap plate 410 and in which a sealing cap may be installed. The electrolyte injection port 460 may be disposed to be spaced apart from the vent hole 440 by a predetermined distance in the second direction or in the direction opposite to the second direction. The electrolyte injection port 460 may be disposed between the first terminal 420 and the second terminal 430.

The cap assembly 400 may further include an insulating plate 470. The insulating plate 470 may be disposed between the cap plate 410 and the electrode assembly 200. The insulating plate 470 may insulate the cap plate 410 from the electrode assembly 200 by preventing direct contact therebetween. The insulating plate 470 may fix the position of the electrode assembly 200 inside the case 100. The insulating plate 470 may prevent the electrode assembly 200 from breaking when the cap plate 410 is deformed inwardly of the case 100, such as by an external impact.

The insulating plate 470 may be disposed inside the case 100 to face the electrode assembly 200 in the third direction. That is, the electrode assembly 200, the insulating plate 470, and the cap plate 410 may be sequentially disposed in the third direction. The insulating plate 470 may be fixed to an inner side surface of the case 100 by various types of coupling methods, such as fitting, welding, bolting, adhesion, and the like. The insulating plate 470 may be in contact with one surface of the electrode assembly 200 from which the first tab member 301 and the second tab member 302 extend. The insulating plate 470 may be formed of an insulating material such as polyethylene (PE), polypropylene (PP), polyethylene terephthalate (PET), rubber, or the like.

The first current collector assembly 500 may be disposed between the electrode assembly 200 and the cap assembly 400. The first current collector assembly 500 may be connected to the first terminal 420 and the first tab member 301. The first current collector assembly 500 may function as a component that electrically connects the first terminal 420 and the first tab member 301. The first current collector assembly 500 may be formed of an electrically conductive material. The first current collector assembly 500 may be formed of the same material as the first terminal 420. The first current collector assembly 500 may be implemented in various ways depending on the type of the secondary battery, the shape or arrangement position of the first tab member 301, the shape or arrangement position of the first terminal 420, and the like.

According to an example of the present embodiment, the first current collector assembly 500 may include a first current collector 510 and a first current collector plate 520, as shown in FIG. 3. In FIG. 3, the first current collector 510 and the first current collector plate 520 are illustrated as separate components, but the first current collector 510 and the first current collector plate 520 may be formed as an integral member (e.g., monolithic and seamless member).

The first current collector 510 may be connected to the first terminal 420. The first current collector 510 may include a first body 511 and a first boss 512. The first body 511 may form one side of the exterior of the first current collector 510, and may support the first boss 512. The first body 511 and the first boss 512 may be manufactured as separate members and then joined together or may be formed as an integral member.

The first body 511 may be disposed between the electrode assembly 200 and the first terminal 420. The first body 511 may be spaced apart from a lower surface of the first terminal 420 by a predetermined distance in the third direction. The first body 511 may be disposed in the insulating plate 470, and the first body 511 may also be disposed on an upper or lower side of the insulating plate 470. A planar shape of the first body 511 may be variously changed in design, such as a circular shape, an elliptical shape, a polygonal shape, and the like, in addition to the rectangular shape illustrated in FIG. 3.

The first boss 512 may extend from the first body 511 and may be connected to the first terminal 420. The first boss 512 may have a cylindrical shape extending in the third direction from the first body 511.

An upper end surface of the first boss 512 may be in contact with the lower surface of the first terminal 420. In this case, the first boss 512 may vertically pass through the insulating plate 470 in the third direction. The upper end surface of the first boss 512 may be joined to the lower surface of the first terminal 420 by laser welding. A planar shape of the first boss 512 may be variously changed in design, such as an elliptical shape, a polygonal shape, and the like, in addition to the circular shape illustrated in FIG. 3.

The first current collector plate 520 may be fixed to the first current collector 510, and connected to the first tab member 301. The first current collector plate 520 may include a first center plate 521, a first inner plate 522, and a first outer plate 523.

The first center plate 521 may form a central portion of the exterior of the first current collector plate 520, and may be connected to the first current collector 510. The first center plate 521 may be disposed between the first body 511 and the electrode assembly 200. The first center plate 521 may be in contact with a lower surface of the first body 511 located on the opposite side of the first boss 512. The first center plate 521 may be fixed to the lower surface of the first body 511 by various types of coupling methods, such as welding, bolting, adhesion, and the like. Both end portions of the first center plate 521 may extend from the first body 511 toward the electrode assembly 200. Both end portions of the first center plate 521 may pass through the insulating plate 470 and may be disposed below the insulating plate 470. For example, referring to FIGS. 3-4, the center of the first center plate 521 may extend upward through an opening in the insulating plate 470 (FIG. 3) to have the first current collector 510 extend above the insulating plate 470 (FIG. 4), while opposite end portions of the first center plate 521 may extend through the opening in the insulating plate 470 below the insulating plate 470 (FIG. 4). The first inner plate 522 may extend in the second direction from the first current collector 510. The first inner plate 522 may extend in the second direction from one end portion of the first center plate 521 (e.g., below the insulating plate 470). The first inner plate 522 may be disposed to face the first inner tab member 310 in the third direction.

A first inner slit S11 having a predetermined shape and extending in the second direction may be formed in the first inner plate 522 (FIG. 3). Some of the plurality of first inner tabs 311 constituting the first inner tab member 310 may each have an end surface that is in contact with a facing surface (first surface) of the first inner plate 522 and joined to the facing surface by laser welding or the like. In addition, the remaining first inner tabs 311 among the plurality of first inner tabs 311 may pass through the first inner slit S11, come into contact with an opposing surface (second surface) of the first inner plate 522, which is opposite to the facing surface, and may be joined to the opposing surface by laser welding or the like. The shape of the first inner slit S11 and the joining form of the first inner plate 522 and the first inner tab member 310 will be described in detail below.

The first outer plate 523 may extend in a direction opposite to the second direction from the first current collector 510. The first outer plate 523 may extend in the direction opposite to the second direction from the other end portion of the first center plate 521, e.g., the first inner and outer plates 522 and 523 may extend in opposite direction from the first center plate 521. The first outer plate 523 may be disposed to face the first outer tab member 320 in the third direction.

A first outer slit S12 having a predetermined shape and extending in the second direction may be formed in the first outer plate 523 (FIG. 3). Some of the plurality of first outer tabs 321 constituting the first outer tab member 320 may each have an end surface that is in contact with a facing surface (first surface) of the first outer plate 523 and joined to the facing surface by laser welding or the like. In addition, the remaining first outer tabs 321 among the plurality of first outer tabs 321 may pass through the first outer slit S12, come into contact with an opposing surface (second surface) of the first outer plate 523, which is opposite to the facing surface, and may be joined to the opposing surface by laser welding or the like. The shape of the first outer slit S 12 and the joining form of the first outer plate 523 and the first outer tab member 320 will be described in detail later.

The secondary battery 2 may further include the second current collector assembly 600 (e.g., the structure of the second current collector assembly 600 may be substantially similar to that of the first current collector assembly 500). The second current collector assembly 600 may be disposed between the electrode assembly 200 and the cap assembly 400. The second current collector assembly 600 may be connected to the second terminal 430 and the second tab member 302. The second current collector assembly 600 may function as a component that electrically connects the second terminal 430 and the second tab member 302. The second current collector assembly 600 may be formed of an electrically conductive material. The second current collector assembly 600 may be formed of the same material as the second terminal 430. The second current collector assembly 600 may be implemented in various ways depending on the type of the secondary battery, the shape or arrangement position of the second tab member 302, and the shape or arrangement position of the second terminal 430.

According to an example of the present embodiment, the second current collector assembly 600 may include a second current collector 610 and a second current collector plate 620, as shown in FIG. 3. In FIG. 3, the second current collector 610 and the second current collector plate 620 are illustrated as separate components, but the second current collector 610 and the second current collector plate 620 may be formed as an integral member.

The second current collector 610 may be connected to the second terminal 430. The second current collector 610 may include a second body 611 and a second boss 612. The second body 611 forms one side of the exterior of the second current collector 610, and may support the second boss 612. The second body 611 and the second boss 612 may be manufactured as separate members and then joined together or may be formed as an integral member.

The second body 611 may be disposed between the electrode assembly 200 and the second terminal 430. The second body 611 may be spaced apart from a lower surface of the second terminal 430 by a predetermined distance in the third direction. The second body 611 may be disposed in the insulating plate 470, and the second body 611 may also be disposed on an upper or lower side of the insulating plate 470. A planar shape of the second body 611 may be variously changed in design, such as a circular shape, an elliptical shape, a polygonal shape, and the like, in addition to the rectangular shape illustrated in FIG. 3.

The second boss 612 may extend from the second body 611 and may be connected to the second terminal 430. The second boss 612 may have a cylindrical shape extending in the third direction from the second body 611.

An upper end surface of the second boss 612 may be in contact with the lower surface of the second terminal 430.

In this case, the second boss 612 may vertically pass through the insulating plate 470 in the third direction. The upper end surface of the second boss 612 may be joined to the lower surface of the second terminal 430 by laser welding. A planar shape of the second boss 612 may be variously changed in design, such as an elliptical shape, a polygonal shape, and the like, in addition to the circular shape illustrated in FIG. 3.

The second current collector plate 620 may be fixed to the second current collector 610, and connected to the second tab member 302. The second current collector plate 620 may include a second center plate 621, a second inner plate 622, and a second outer plate 623.

The second center plate 621 may form a central portion of the exterior of the second current collector plate 620, and may be connected to the second current collector 610. The second center plate 621 may be disposed between the second body 611 and the electrode assembly 200. The second center plate 621 may be in contact with a lower surface of the second body 611 located on the opposite side of the second boss 612. The second center plate 621 may be fixed to the lower surface of the second body 611 by various types of coupling methods, such as welding, bolting, adhesion, and the like. Both end portions of the second center plate 621 may extend from the second body 611 toward the electrode assembly 200. Both end portions of the second center plate 621 may pass through the insulating plate 470 and may be disposed below the insulating plate 470.

The second inner plate 622 may extend in the second direction from the second current collector 610. The second inner plate 622 may extend in the second direction from one end portion of the second center plate 621. The second inner plate 622 may be disposed to face the second inner tab member 330 in the first direction.

A second inner slit S21 having a predetermined shape and extending in the second direction may be formed in the second inner plate 622. Some of the plurality of second inner tabs 331 constituting the second inner tab member 330 may each have an end surface that is in contact with a facing surface (first surface) of the second inner plate 622 and joined to the facing surface by laser welding or the like. In addition, the remaining second inner tabs 331 among the plurality of second inner tabs 331 may pass through the second inner slit S21, come into contact with an opposing surface (second surface) of the second inner plate 622, which is opposite to the facing surface, and may be joined to the opposing surface by laser welding or the like. The shape of the second inner slit S21 and the joining form of the second inner plate 622 and the second inner tab member 330 will be described in detail later.

The second outer plate 623 may extend in a direction opposite to the second direction from the second current collector 610. The second outer plate 623 may extend in the direction opposite to the second direction from the other end portion of the second center plate 621. The second outer plate 623 may be disposed to face the second outer tab member 340 in the third direction.

A second outer slit S22 having a predetermined shape and extending in the second direction may be formed in the second outer plate 623. Some of the plurality of second outer tabs 341 constituting the second outer tab member 340 may each have an end surface that is in contact with a facing surface (first surface) of the second outer plate 623 and joined to the facing surface by laser welding or the like. In addition, the remaining second outer tabs 341 among the plurality of second outer tabs 341 may pass through the second outer slit S22, come into contact with an opposing surface (second surface) of the second outer plate 623, which is opposite to the facing surface, and may be joined to the opposing surface by laser welding or the like. The shape of the second outer slit S22 and the joining form of the second outer plate 623 and the second outer tab member 340 will be described in detail later.

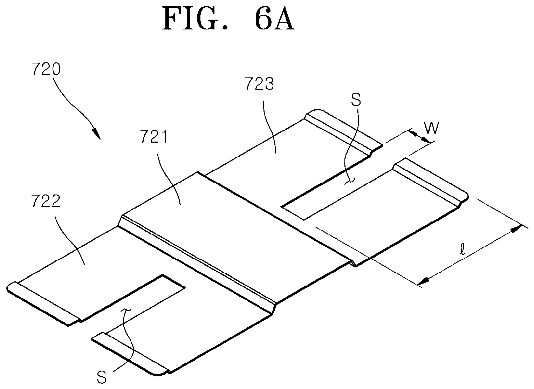

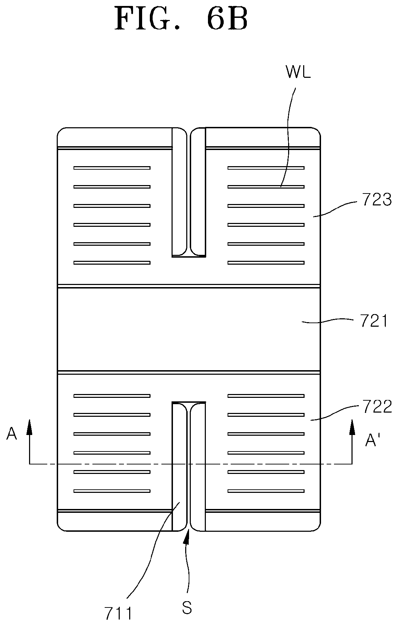

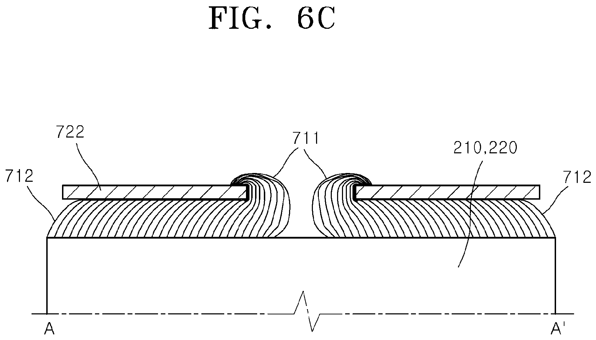

FIG. 6A is a perspective view schematically illustrating an example of a current collector plate according to an embodiment of the present disclosure, FIG. 6B is a plan view schematically illustrating a state in which electrode tabs are connected to the current collector plate of FIG. 6A, and FIG. 6C is a cross-sectional view taken along line AA' of FIG. 6B. Here, a current collector plate 720 of FIG. 6A may be the first current collector plate 520 or the second current collector plate 620 described above with reference to FIGS. 1 to 5. In addition, electrode tabs 711 and 712 connected to the current collector plate 720 may be the electrode tabs 311, 321, 331, and 341 included in the tab members 301 and 302 (see FIG. 3) of the battery.

Referring to FIGS. 6A to 6C, the current collector plate 720 may include a center plate 721, an inner plate 722, and an outer plate 723. However, the current collector plate 720 may include only one of the inner plate 722 and the outer plate 723.

The center plate 721 may form a central portion of the exterior of the current collector plate 720, and the current collector 510 or 610 (see FIG. 3) may be joined and fixed to an upper surface of the center plate 721. The inner plate 722 may extend from one side of the center plate 721. In addition, the outer plate 723 may extend from the center plate 721 to a side opposite the inner plate 722. A direction in which the inner plate 722 and the outer plate 723 extend from the center plate 721 may be a direction (a Y direction in FIG. 3, that is in the second direction) that intersects a direction (an X direction in FIG. 3, that is in the second direction) in which the plurality of electrode tabs 311, 321, 331, or 341 constituting the tab member 301 and 302 (see FIG. 3) of the battery are arranged.

A slit S elongated in the second direction may be formed in each of the inner plate 722 and the outer plate 723, i.e., the current collector plates 722 and 723. In addition, referring to FIG. 6C, some electrode tabs 711 (first electrode tabs) among the plurality of electrode tabs constituting the tab member connected to the current collector plates 722 and 723 may pass through the slit S and may be joined to one surface (i.e., to the upper surface) of each of the current collector plates 722 and 723. In addition, referring to FIG. 6C, the remaining electrode tabs 712 (second electrode tabs) among the plurality of electrode tabs that do not pass through the slit S may be joined to the other surface (i.e., to the lower surface) of each of the current collector plates 722 and 723. In other words, referring to FIG. 6C, the electrode tabs may be divided to have some electrode tabs welded to upper surfaces of the current collector plates 722 and 723, and some electrode tabs welded to lower surfaces of the same current collector plates 722 and 723.

In detail, if there was no slit S in the current collector plates and all the electrode tabs were to be joined to the lower surfaces of the current collector plates (i.e., to surfaces of the current collector plates facing the electrode assembly), all the electrode tabs disposed below the current collector plates would have been welded through the upper surfaces of the current collector plates via welding lines that are shorter than a width of each of the current collector plates. This is because welding across the entire width of each of the current collector plates, including edges, may cause damage to the underlying electrodes due to welding energy, e.g., a laser beam.

As a result, only inner portions of the current collector plates, excluding the edges, would have been welded, thereby causing some of the electrode tabs remain unwelded to the current collector plates as unwelded electrode tabs. The unwelded electrode tabs may cause an increase in resistance, which may result in a decrease in the performance of the battery that includes the unwelded electrode tabs.

In contrast, according to the present embodiment, some electrode tabs, i.e., the first electrode tabs 711, pass through the slit S and are joined to the upper surfaces of the current collector plates 722 and 723, while the remaining electrode tabs, i.e., the second electrode tabs 712, are joined to the lower surfaces of the current collector plates 722 and 723, as illustrated in FIG. 6C. Thus, by dividing all the electrode tabs 711 and 712 such that the first electrode tabs 711 are welded to the upper surfaces of the current collector plates 722 and 723 and the second electrode tabs 712 are welded to the lower surfaces of the current collector plates 722 and 723, the occurrence of unwelded electrode tabs can be suppressed or prevented, even when welding is performed only on the inner portions of the current collector plates 722 and 723 (see welding line WL in FIG. 6B), excluding the edges. As a result, the performance degradation of the battery including the unwelded electrode tabs can be suppressed or prevented.

According to an aspect of the present embodiment, the slit S may be formed in each of the current collector plates 722 and 723 in a direction (second direction) parallel to a width direction of the electrode tabs 711 and 712. At this time, a length l of the slit S may be at least greater than or equal to a width of the first electrode tabs 711 passing through the slit S.

The slit S formed in the second direction may be approximately located at a central portion of each of the current collector plates 722 and 723 (in the first direction). In addition, the first electrode tabs 711 passing through the slit S may be divided into both sides of the slit S and joined to different positions on the upper surface of each of the current collector plates 722 and 723. Accordingly, as many first electrode tabs 711 as possible can be joined to a portion that does not have the welding line WL for joining the second electrode tabs 712, i.e., to a portion of each of the current collector plates 722 and 723 adjacent to the slit S.

In addition, according to the present embodiment, a width W of the slit S may be adjusted. For example, when the width W of the slit S is too small, the first electrode tab 711 may not sufficiently pass through the slit, and in contrast, when the width W is too large, space efficiency may decrease, leading to potentially not all the electrode tabs 711 and 712 being able to be adequately fixed. Thus, the width W of the slit S may be appropriately determined by taking into account not only a space utilization efficiency in relation to the width (size in the first direction) of the current collector plates 722 and 723, but also the thickness, number, and the like of the first electrode tabs 711 passing through the slit S.

For example, the width W of the slit S may be less than 1/2, e.g., less than 1/3, of the width (e.g., dimension in the first direction) of each of the current collector plates 722 and 723. This is because a significant portion of the entire electrode tabs, which are the second electrode tabs 712, e.g., more than a half, are joined to the lower surfaces of the current collector plates 722 and 723, and sufficient space needs to be secured for this purpose.

In addition, the width W of the slit S may vary depending on the thickness and number of first electrode tabs 711 passing through the slit S. More specifically, the width W of the slit S should be at least greater than or equal to the total thickness of all the first electrode tabs 711 passing through the slit S. Accordingly, the width W of the slit S may satisfy Equation 1 below,

[Equation 1]

$$t \times n \le W \le t \times n + 1.2 \text{ to } 2.0 \text{ mm}$$

In Equation 1, above, t represents the thickness of the electrode tab and n represents the number of first electrode tabs. In Equation 1, the last term of 1.2 to 2.0 mm corresponds to a process margin given in consideration of variations in electrode tab thickness, manufacturing processes, and the like.

According to an aspect of the present embodiment, the width W of the slit S may be the same regardless of whether the electrode tabs 711 and 712 are positive electrode tabs or negative electrode tabs. In this case, the mass productivity of the process for manufacturing the current collector plates 722 and 723 can be improved.

According to another example of the present embodiment, the width W of the slit S may vary depending on whether the electrode tabs 711 and 712 are positive electrode tabs or negative electrode tabs. For example, assuming that the number of positive and negative electrode tabs passing through the slit S is the same, and considering that a thickness (e.g., approximately 12 $\mu$m) of one positive electrode tab is generally greater than a thickness (e.g., approximately 8 $\mu$m) of one negative electrode tab, a width of a slit formed in the current collector plate joined to the positive electrode tab may be greater than a width of a slit formed in the current collector plate joined to the negative electrode tab.

Continuing to refer to FIG. 1, a plurality of secondary batteries 2 are provided. The plurality of secondary batteries 2 may be arranged in two or more rows in at least one direction of a length direction (an X-axis direction (first direction) based on FIG. 1) or a width direction (a Y-axis direction (second direction) based on FIG. 1) of the housing 10. In FIG. 1, a case in which the plurality of secondary batteries 2 are arranged in six rows in the length direction of the housing 10 is illustrated as an example, but the arrangement form of the plurality of secondary batteries 2 may be variously changed in design. The plurality of secondary batteries 2 may be arranged side by side. The number of secondary batteries 2 may be variously changed in design depending on the size, shape, or the like of the housing 10.

The first terminal 420 of one of a pair of adjacent secondary batteries 2 and the second terminal 430 of the other one of the pair of adjacent secondary batteries 2 may be disposed to face each other in the length direction of the housing 10. That is, the front surface portion 120 of one of the adjacent secondary batteries 2 may be disposed to face the rear surface portion 130 of the other one of the adjacent secondary batteries 2.

The plurality of secondary batteries 2 may be electrically connected by bus bars 3. The bus bar 3 may be disposed between the cover 12 and the secondary battery 2. A plurality of bus bars 3 may be provided. Each of the bus bars 3 may connect a pair of adjacent secondary batteries 2 in series or parallel.

As an example, both sides of the bus bar 3 may be connected to the first terminal 420 of one of the pair of adjacent secondary batteries 2 and the second terminal 430 of the other one of the pair of adjacent secondary batteries 2, respectively. Accordingly, the plurality of secondary batteries 2 may be connected in series with each other by the bus bars 3. However, it is also possible that both sides are respectively connected to the first terminal 420 of one of the pair of adjacent secondary batteries 2 and the second terminal 430 of the other one of the pair of adjacent secondary batteries 2, or that both sides are respectively connected to the second terminal 430 of one of the pair of adjacent secondary batteries 2 and the second terminal 430 of the other one of the pair of adjacent secondary batteries.

The bus bar 3 may be formed of an electrically conductive material, such as copper, aluminum, nickel, or the like. The specific shape of the bus bar 3 may be variously changed in design that can electrically connect the adjacent secondary batteries 2.

The plurality of bus bars 3 may be supported inside the housing 1 by a bus bar holder H. The bus bar holder H may be formed to have the shape of a flat plate. The bus bar holder H may be disposed between the cover 12 and the secondary batteries 2. The bus bars 3 may be fixed to the bus bar holder H by various types of coupling methods, such as fitting coupling, bolting, injection coupling, and the like. The bus bar holder H may include a polymer compound material that is electrically insulative.

By way of summation and review, a plurality of electrode tabs may be physically joined to a current collector assembly using a metal-to-metal joining method, e.g., welding. For example, an electrode assembly may be inserted into a case, the current collector assembly may be disposed in the case, such that a current collector plate comes into contact with the plurality of electrode tabs, and then welding may be performed on the plurality of electrode tabs through an upper surface of the current collector plate. For example, welding processes such as heat welding and laser welding may be used. However, due to the nature of welding processes that use high-energy heat sources or laser light sources, surrounding components, e.g., the electrode assembly, may be prone to damage during the welding process.

The present disclosure is directed to providing a battery and a battery pack including the same, capable of preventing damage to an electrode assembly or the occurrence of unwelded electrode tabs during a welding process between a current collector plate and a plurality of electrode tabs. That is, according to an embodiment of the present disclosure, since welding is performed only on some of a plurality of electrode tabs in contact with a facing surface of a current collector plate, damage to an electrode assembly during welding can be prevented, and since welding is performed on the remaining electrode tabs, which are in contact with a surface opposite to the facing surface through a slit of the current collector plate, the occurrence of unwelded electrode tabs can be prevented.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims

**Claims**

1. A battery, comprising:

   a case;
   an electrode assembly inside the case, the electrode assembly including electrodes parallel to each other in a first direction;
   a tab member including electrode tabs extending from the electrodes in a one-to-one manner, the electrode tabs including first electrode tabs;
   a cap assembly facing the electrode assembly, the cap assembly including a terminal; and
   a current collector assembly between the electrode assembly and the cap assembly, the current collector assembly including a current collector connected to the terminal and a current collector plate connected to the tab member, and the current collector plate including a slit through which the first electrode tabs pass.

2. The battery of claim 1, wherein the first electrode tabs pass through the slit and are joined to one surface of the current collector plate.

3. The battery of claim 2, wherein the electrode tabs further include second electrode tabs that do not pass through the slit, the second electrode tabs being joined to another surface of the current collector plate.

4. The battery of claim 2 or claim 3, wherein the slit extends in a second direction intersecting the first direction.

5. The battery of claim 4, wherein the first electrode tabs pass through the slit and are joined to the one surface of the current collector plate at opposite sides of the slit in the first direction.

6. The battery of claim 5, wherein the slit is located at a center of the current collector plate in the first direction.

7. The battery of any one of claims 4 to 6, wherein a width (W) of the slit satisfies Equation 1,

$$[\text{Equation 1}]$$

$$t \times n \leq W \leq t \times n + 2.0 \text{ mm},$$

   wherein t represents a thickness of one of the first electrode tabs and n represents a number of the first electrode tabs.

8. A battery, comprising:

   a case;
   an electrode assembly inside the case, the electrode assembly including positive electrodes and negative electrodes alternating in a first direction;
   a positive electrode tab member including positive electrode tabs extending from the positive electrodes in a one-to-one manner;
   a negative electrode tab member spaced apart from the positive electrode tab member in a second direction intersecting the first direction, the negative electrode tab member including negative electrode tabs extending from the negative electrodes in a one-to-one manner;
   a cap assembly facing the electrode assembly, the cap assembly including a positive electrode terminal and a negative electrode terminal;
   a positive electrode current collector assembly between the electrode assembly and the cap assembly, the positive electrode current collector assembly including a positive electrode current collector connected to the positive electrode terminal and a positive electrode current collector plate connected to the positive electrode tab member, and the positive electrode current collector plate including a first slit through which first positive electrode tabs, which are portions of the positive electrode tabs, pass; and
   a negative electrode current collector assembly between the electrode assembly and the cap assembly, the negative electrode current collector assembly including a negative electrode current collector connected to the negative electrode terminal and a negative electrode current collector plate connected to the negative electrode tab member, and the negative electrode current collector plate including a second slit through which first negative electrode tabs, which are portions of the negative electrode tabs, pass.

9. The battery of claim 8, wherein:

the first positive electrode tabs pass through the first slit and are joined to one surface of the positive electrode current collector plate,
the first negative electrode tabs pass through the second slit and are joined to one surface of the negative electrode current collector plate,
second positive electrode tabs, which are remaining electrode tabs that do not pass through the first slit among the positive electrode tabs, are joined to another surface of the positive electrode current collector plate, and
second negative electrode tabs, which are remaining electrode tabs that do not pass through the second slit among the negative electrode tabs, are joined to another surface of the negative electrode current collector plate.

10. The battery of claim 9, wherein each of the first slit and the second slit extends in the second direction.

11. The battery of claim 10, wherein:

the first positive electrode tabs pass through the first slit and are joined to the one surface of the positive electrode current collector plate at opposite sides of the first slit in the first direction, and
the first negative electrode tabs pass through the second slit and are joined to the one surface of the negative electrode current collector plate at opposite sides of the second slit in the first direction.

12. The battery of claim 11, wherein:

the first slit is located at a center of the positive electrode current collector plate in the first direction, and
the second slit is located at a center of the negative electrode current collector plate in the first direction.

13. The battery of claim 11 or claim 12, wherein:

a width (W1) of the first slit satisfies Equation 2,
a width (W2) of the second slit satisfies Equation 3,

[Equation 2]

$$t1 \times n1 \leq W1 \leq t1 \times n1 + 1.2 \text{ to } 2.0 \text{ mm},$$

[Equation 3]

$$t2 \times n2 \leq W2 \leq t2 \times n2 + 1.2 \text{ to } 2.0 \text{ mm},$$

t1 represents a thickness of one of the first positive electrode tabs,
n1 represents a number of the first positive electrode tabs,
t2 represents a thickness of one of the first negative electrode tabs, and
n2 represents a number of the first negative electrode tabs.

14. The battery of claim 13, wherein the width of the first slit is equal to or greater than the width of the second slit.

15. A battery pack, comprising:

a housing; and
a plurality of batteries inside the housing, each of the batteries being in accordance with any one of the preceding claims.

# FIG. 1

# FIG. 2

# FIG. 3

# FIG. 4

EP 4 742 340 A1

# FIG. 5

# FIG. 6A

# FIG. 6B

FIG. 6C

Europäisches
Patentamt

European
Patent Office

Office européen
des brevets

# EUROPEAN SEARCH REPORT

**Application Number**

EP 25 19 8797

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2013 196959 A (TOYOTA IND CORP) 30 September 2013 (2013-09-30) | 1,2,4-8, 15 | INV. H01M10/04 H01M50/528 |
| A | * paragraphs [0034], [0022], [0023], [0024], [0029], [0036], [0032]; figures 3,1b,1c * | 3,9-14 | H01M50/536 H01M50/54 H01M4/70 |
| A | US 2023/278138 A1 (LEE TAE GU [KR] ET AL) 7 September 2023 (2023-09-07) * paragraphs [0075], [0079]; figures 4,5,8B,9A,9B * | 3,9-14 | |

**TECHNICAL FIELDS
SEARCHED     (IPC)**

H01M

The present search report has been drawn up for all claims

| Place of search | Date of completion of the search | Examiner |
|---|---|---|
| The Hague | 3 February 2026 | Hartwell, Ian |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 25 19 8797

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2026

| Patent document cited in search report | Publication date | Patent family member(s) | Publication date |
|---|---|---|---|
| JP 2013196959 A | 30-09-2013 | JP 5741498 B2 | 01-07-2015 |
| | | JP 2013196959 A | 30-09-2013 |
| US 2023278138 A1 | 07-09-2023 | CN 110233231 A | 13-09-2019 |
| | | CN 118367309 A | 19-07-2024 |
| | | EP 3537504 A1 | 11-09-2019 |
| | | HU E068338 T2 | 28-12-2024 |
| | | KR 20190105856 A | 18-09-2019 |
| | | KR 20230155394 A | 10-11-2023 |
| | | US 2019280279 A1 | 12-09-2019 |
| | | US 2023278138 A1 | 07-09-2023 |

EPO FORM P0459

For more details about this annex : see Official Journal of the European Patent Office, No. 12/82